**Europäisches Patentamt**

**European Patent Office**

**Office européen des brevets**

(11) Veröffentlichungsnummer: **0 211 315 B1**

# (12) EUROPÄISCHE PATENTSCHRIFT

(45) Veröffentlichungstag der Patentschrift: **13.03.91**

(21) Anmeldenummer: **86110060.0**

(22) Anmeldetag: **22.07.86**

(51) Int. Cl.5: **B01D 25/12**

(54) Kammerfilterpresse.

(30) Priorität: **01.08.85 DE 3527556**

(43) Veröffentlichungstag der Anmeldung:
**25.02.87 Patentblatt 87/09**

(45) Bekanntmachung des Hinweises auf die
Patenterteilung:
**13.03.91 Patentblatt 91/11**

(84) Benannte Vertragsstaaten:
**AT BE CH DE FR GB IT LI NL SE**

(56) Entgegenhaltungen:
**DE-A- 1 611 139**
**DE-A- 2 043 156**
**FR-A- 2 255 092**
**FR-A- 2 370 500**
**US-A- 1 720 211**

(73) Patentinhaber: **Rittershaus & Blecher GmbH**
**Wittensteinstrasse 80-100**
**W-5600 Wuppertal 2(DE)**

(72) Erfinder: **Heinrich, Hans Jürgen**
**Wilhelmshöher Strasse 129**
**W-5828 Ennepetal(DE)**
Erfinder: **Oelbermann, Max**
**Moltkestrasse 19**
**W.5630 Remscheid(DE)**

(74) Vertreter: **Peerbooms, Rudolf, Dipl.-Phys.**
**Postfach 200 208 Dickmannstrasse 45c**
**W-5600 Wuppertal 2(DE)**

## Beschreibung

Die Erfindung betrifft eine horizontale Kammerfiterpresse mit jeweils beidseits mit Filtertüchern überspannten, rahmenlosen Kammerplatten und mit einem mittigen Trübezufuhrkanal, wobei jeweils zwei benachbarte Kammerplatten mit einem äußeren, umlaufenden Einspannrand aneinander liegen und zwischen sich eine Filterkammer einfassen, welche ihrerseits aus einem zwischen den Filtertüchern liegenden, mittleren Filterkuchenraum und zwei jeweils zwischen Platte und Filtertuch liegenden, äußeren Filträumen besteht, und mit Nachpreßeinrichtungen für die Filterkuchen, welche im Bereich mindestens eines der beiden Filträume jeder Filterkammer angeordnet sind.

Eine derartige Kammerfilterpresse ist beispielsweise durch die DE-A 27 54 537 bekannt. Bei den dortigen Nachpreßeinrichtungen handelt es sich um gesonderte Preßmembranen, die zusätzlich zu den Filtertüchern auf den Kammerplatten aufgespannt sind. Auf diese Weise wird zwischen Preßmembranen und Filterplatten ein Druckmediumraum gebildet, welcher aufgrund der hohen Preßdrücke sorgfältig nach außen abgedichtet sein muß. Insbesondere am umlaufenden Einspannrand der Membranen kann es leicht zu Leckagen kommen, weil die Einspannkräfte der Preßmembran unmittelbar von dem maximalen Schließdruck abhängen, welcher auf das Plattenpaket ausgeübt werden kann. Zudem sind dort die beiden, eine Kammerplatte zwischen sich einfassenden Membranen einstückig mit einem die mittige Trübezufuhröffnung der Platte durchsetzenden Ärmel versehen, der bei hohem Preßmediumdruck radial einwärts in die Trübezufuhröffnung hineingedrückt wird, wodurch auf die ebenfalls mit einem Ärmel die Trübezufuhröffnung durchsetzenden Filtertüchern ein hoher Zug ausgeübt wird, der zum Reißen des Filtertuches führen kann, weshalb dort der anwendbare Preßmediumdruck begrenzt ist. Aufgrund dieser Schwierigkeiten ist es nahezu unmöglich, ältere Kammerfilterpressen nachträglich noch mit einer Nachpreßeinrichtung in Form von Preßmembranen auszurüsten.

Durch die DE-A 33 17 235 und DE-A 31 28 970 sind Rahmenfilterpressen bekannt, bei welchen Preßmembranen zwischen Stützplatten und gesonderten Einspannrahmen befestigt sind. Wie in den genannten Schriften näher dargelegt ist, ist bei diesem Bautyp die Abdichtung des Preßmediumraumes zwar einfacher als bei den oben beschriebenen Kammerfilterpressen. Doch kann es auch bei Rahmenfilterpressen nach längerem Betrieb durch Kriecherscheinungen zu Undichtigkeiten kommen, und auch dort hängt die Dichtwirkung in entscheidendem Maße vom Schließdruck der Presse ab. In jedem Fall ist es aber ausgeschlossen, eine ältere Filterpresse ohne Nachpreßeinrichtungen durch zwischen die Kammerplatten geschaltete Rahmen nachzurüsten, da hierdurch die Dicke des Plattenpaketes in unzulässiger Weise ansteigen würde.

Durch die FR-A 2 255 092 ist eine Plattenfilterpresse bekannt, bei der jeweils in dem von zwei Filtertüchern begrenzten Filtratraum steife, dickwandige Blähkissen lose angeordnet sind. Jedes dieser Blähkissen beansprucht dort in seinem ungeblähten Grundzustand bereits einen Raum, der größer ist als ein Filterkuchenraum, weshalb solche Blähkissen eine erhebliche Vergrößerung der Plattenfilterpresse bedingen bzw. bei Nachrüstung einer Filterpresse zu einer erheblichen Reduzierung der Gesamtfilterfläche führen würden.

Bei einer Filterpresse mit vertikal übereinander liegenden Filterkammern (DE-A 2 043 156) ist es ferner bekannt, in die Filträume jeweils ein einstückig hergestelltes, dünnwandiges Blähkissen einzulegen, das während des Filtrationsvorganges flach zusammengepreßt wird. Bei den heute üblichen hohen Filtrierdrücken werden diese Blähkissen jedoch an ihrem Faltrand bei jedem Filtrierzyklus so scharf geknickt, daß sie nach wenigen Filtrierzyklen dem ebenfalls sehr hohen Nachpreßdruck nicht mehr standhalten, sondern undicht werden oder sogar platzen. Darüberhinaus sind diese bekannten Blähkissen nicht für Filterpressen mit mittiger Trübezufuhr verwendbar.

Der Erfindung liegt die Aufgabe zugrunde, eine gattungsgemäße Kammerfilterpresse zu schaffen, deren Nachpreßeinrichtungen in der Herstellung, Montage und Wartung einfach und preiswert sind und eine hohe Verschleißfestigkeit auch bei hohem Filtrier- und Nachpreßdruck aufweisen, wobei insbesondere auch ein nachträglicher Einbau bei Kammerfilterpressen mit geringem Aufwand möglich sein soll.

Diese Aufgabe ist erfindungsgemäß dadurch gelöst, daß die Nachpreßeinrichtungen ringförmige Blähkissen sind, welche jeweils innerhalb eines Filtratraumes an der angrenzenden Kammerplatte über Befestigungsmittel aufgehängt sind und jeweils aus zwei mit einem Durchbruch für die mittige Trübezufuhr versehenen Membranen bestehen, die an ihrem äußeren Rand und an ihrem inneren Rand flächig aufeinanderliegen und dicht, z. B. durch Verschweißen oder Verkleben, miteinander verbunden sind.

Durch die Verwendung von ringförmigen Blähkissen wird die Abdichtung des Preßmediums gegenüber der Trübezufuhrleitung und den Filtratablaufleitungen praktisch unabhängig vom Schließdruck der Kammerfilterpresse. D. h. der Schließdruck braucht nur so groß zu sein, daß bei einer Beaufschlagung der Blähkissen das Plattenpaket gerade noch zusammengehalten wird. Zusätzliche Dichtungskräfte sind nicht erforderlich. Bei der Nachrüstung von älteren Kammerfilterpressen ergibt sich dadurch insbesondere der Vorteil, daß die aneinanderliegenden Einspannränder der Kammerplatten nicht im Hinblick auf eine Abdichtung der Nachpreßeinrichtungen nachbearbeitet werden müssen. Die Aufhängung der Blähkissen an der jeweils angrenzenden Kammerplatte über spezielle Befestigungsmittel sorgt dafür, daß die Blähkissen auch im drucklosen Zustand nicht in sich zusammenfallen und somit eine einwandfreie Positionierung gegenüber den Filtertüchern behalten. Aufgrund der Flüssigkeitsverbindung zwischen der filtertuchseitigen und der plattenseitigen Hälfte des Filtratraumes kann schließlich das Filtrat durch einfache plattenseitige Bohrungen abgeleitet werden, ohne daß zusätzliche Ableitelemente zwischen Filtertuch und Blähkissen geschaltet werden müßten. Von entscheidender Bedeutung ist bei der Erfindung der Aufbau der Blähkissen aus jeweils zwei, an ihrem Außenrand und an den Rändern ihrer Durchtrittsöffnungen dicht miteinander verklebten oder verschweißten Membranen, durch die ein im ungeblähten Grundzustand sehr flaches Kissen erreicht wird, das an seinen Rändern nicht mehr durch den Filtrierdruck geknickt wird und durch den Nachpreßdruck auch nicht mehr radial einwärts in den mittigen Trübezufuhrkanal hinein ausgeweitet wird.

In Weiterbildung der Erfindung kann das Blähkissen im Bereich von plattenseitigen Stütznocken jeweils eine abgedichtete Durchtrittsöffnung aufweisen. Benachbarte Kammerplatten können somit an ihren äußeren Einspannrändern trotz der Verwendung von Blähkissen vollständig zur Anlage kommen, wodurch eine gute Abdichtung der dazwischenliegenden Filterkammer gewährleistet bleibt.

Der Erfindung zufolge können die Befestigungsmittel von einer Kissenhauptfläche abragende Steckstifte sein, denen an den Kammerplatten Aufnahmelöcher zugeordnet sind. Auch bei dieser Ausgestaltung sind bei der Umrüstung älterer Kammerfilterpressen keine aufwendigen Nachrüstungsarbeiten erforderlich, da Kammerfilterplatten üblicherweise mit Befestigungslöchern für Kanalierungsmatten versehen sind, die nunmehr für die Steckstifte der Blähkissen benutzt werden können.

Nach einer bevorzugten Ausführungsform der Erfindung können die Befestigungsmittel alternativ jeweils aus einem mindestens am oberen Rand des Blähkissens angesetzten Einhängerandstreifen bestehen, welcher um den Einspannrand der jeweiligen Kammerplatte herumgelegt ist und über Haltestifte oder dgl. am Außenrand der Kammerplatte, z. B. zusammen mit den Filtertüchern, aufgehängt ist. Mit Hilfe des Einhängerandstreifens können die Blähkissen völlig analog zu den Filtertüchern über die Kammerplatten gespannt werden, wodurch bei der Umrüstung älterer Kammerfilterpressen keine zusätzlichen Haltevorrichtungen an den Kammerplatten anzubringen sind. Ist nach längerer Betriebsdauer ein Auswechseln der Blähkissen erforderlich, kann diese Wartungsarbeit genauso routinemäßig wie das Auswechseln der Filtertücher erfolgen.

Der Erfindung zufolge kann der Einhängerandstreifen ein vollständig um das Blähkissen herumlaufender, durchlässiger Gewebestreifen sein. Durch die allseitige Einspannung des Blähkissens ergibt sich eine besonders genaue, stets gleich bleibende Positionierung. Dennoch ist aufgrund der Verwendung von durchlässigem Gewebe ein Filtratübertritt von der filtertuchseitigen zur plattenseitigen Hälfte des Filterraumes gesichert.

Gemäß der Erfindung kann der Einhängerandstreifen unmittelbar neben dem Außenrand des Blähkissens mit mehreren Durchlaßöffnungen versehen sein. Auf diese Weise ist in jedem Falle ein Filtratübertritt vom Filtertuch zur Kammerplatte gesichert.

Gemäß einer weiteren Variante der Erfindung kann das Filtertuch, welches den das Blähkissen aufnehmenden Filtratraum begrenzt, gleichzeitig als Befestigungsmittel für das Blähkissen dienen, wobei zwischen Blähkissen und Filtertuch ein oder mehrere Verbindungsglieder vorgesehen sind. Vorteilhafterweise ist hier eine Lösbarkeit der Verbindungsglieder vorgesehen, damit die eine relativ kurze Lebensdauer aufweisenden Filtertücher unabhängig von den Blähkissen ausgewechselt werden können.

Gemäß einer weiteren Ausführungsform der Erfindung können die eine Kammerplatte beidseits überspannenden Filtertücher im Bereich des zentralen Zufuhrkanals über einen Filtertuchärmel miteinander verbunden sein und kann das Blähkissen aus einem steifen Membranmaterial bestehen und im Bereich seiner Durchtrittsöffnungen am Filtertuchärmel aufgehängt sein. Da das Blähkissen einerseits durch die Platte und andererseits durch das vorgespannte Filtertuch sowohl im drucklosen als auch im beaufschlagten Zustand stets auf beiden Seiten abgestützt ist, kann durch die Verwendung eines steifen Membranmaterials auch ohne eine zusätzliche Aufhängevorrichtung eine definierte Positionierung des Blähkissens erzielt werden.

Weitere vorteilhafte Ausgestaltungen der Erfindung sind in den Unteransprüchen 9 bis 12 angegeben.

Die Erfindung wird im folgenden anhand mehrerer in der Zeichnung dargestellter Ausführungsbeispiele näher erläutert. In der Zeichnung zeigen:

Fig. 1    in einem vertikalen Längsmittelschnitt eine kleine Gruppe von aufeinanderfolgenden Kammerplatten einer Kammerfilterpresse gemäß einer ersten Ausführungsform der Erfindung,

Fig. 2 eine Seitenansicht auf die plattenseitige Hauptfläche eines der beim Ausführungsbeispiel nach Fig. 1 verwendeten Blähkissens,

Fig. 3 das Blähkissen gemäß einem Schnitt III-III in Fig. 2,

Fig. 4 eine Ansicht auf die filtertuchseitige Hauptfläche eines Blähkissens mit dahinterliegender, verdeckter Kammerplatte gemäß einer zweiten Ausführungsform der Erfindung,

Fig. 5 eine - in analoger Form zu Fig. 1 gezeigte - kleine Gruppe von aufeinanderfolgenden Kammerplatten gemäß einem Schnitt V-V in Fig. 4,

Fig. 6 ein einzelnes Blähkissen der Ausführungsform nach den Fig. 4 und 5 in einer zu Fig. 5 analogen Schnittdarstellung,

Fig. 7 einen Eckausschnitt der Kammerplatte mit vorgesetztem, fest eingehängtem Blähkissen und äußerer Druckmediumleitung,

Fig. 8 eine kleine Gruppe von aufeinanderfolgenden Kammerplatten gemäß einer Blickrichtung VIII-VIII in Fig. 7,

Fig. 9 den Druckanschluß des Blähkissens gemäß einem Schnitt IX-IX in Fig. 4,

Fig. 10 eine Ansicht auf die filtertuchseitige Hauptfläche eines Blähkissens mit dahinterliegender Kammerplatte gemäß einer weiteren Ausführungsform der Erfindung,

Fig. 11 die Kammerplatte und das Blähkissen nach Überspannung mit einem Filtertuch gemäß einem Schnitt XI-XI in Fig. 10,

Fig. 12 eine Kammerplatte mit Blähkissen und Filtertuch gemäß einer weiteren Ausführungsform der Erfindung in analoger Darstellung zu Fig. 5 und

Fig. 13 eine Kammerplatte mit Blähkissen und Filtertuch gemäß einer fünften Ausführungsform der Erfindung.

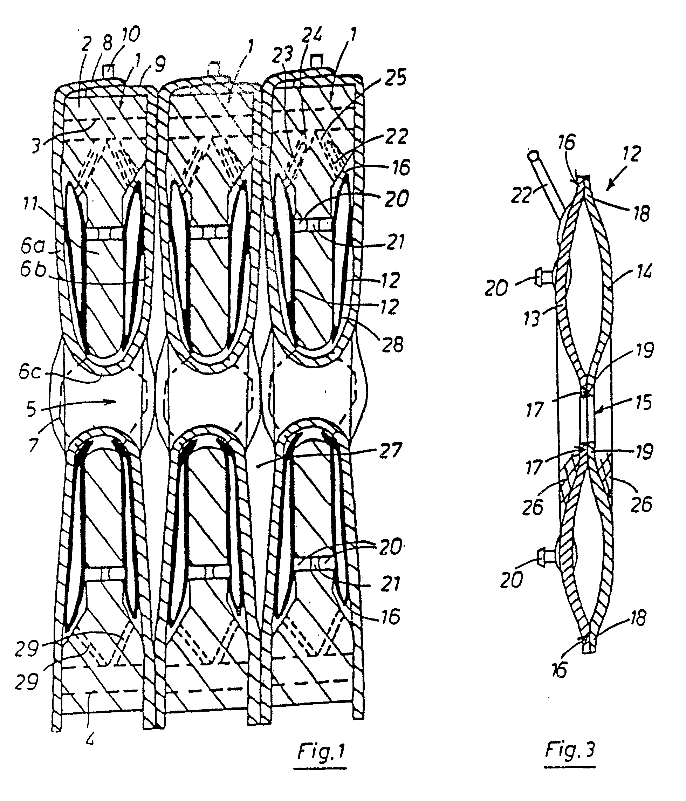

Beim Ausführungsbeispiel nach den Fig. 1 bis 3 umfaßt eine Kammerfilterpresse eine Vielzahl von gleichartigen, aufeinanderfolgenden Kammerplatten 1, die in üblicher Weise ausgebildet sind. Sie besitzen einen umlaufenden, verdickten Einspannrand 2, in dessen Eckbereichen jeweils axiale Durchgangskanäle vorgesehen sind, wobei einer der oberen Kanäle als Druckmediumkanal 3 zum Nachpressen eines Filterkuchens und der zweite obere Kanal sowie die weiteren unteren Kanäle als Filtratablaufkanäle 4 dienen. Jede Kammerplatte 1 ist in ihrem Zentrum mit einer Durchgangsöffnung versehen, welche als Trübezufuhrkanal 5 dient.

Die Kammerplatten 1 sind jeweils an beiden Seiten mit Filtertüchern 6a, 6b überspannt, die im Bereich der mittigen Durchgangsöffnung 5 über einen Filtertuchärmel 6c miteinander verbunden sind. Ferner weist jede Filterplatte 1, zwei diametral neben der Durchgangsöffnung 5 liegende Stütznocken 7 auf, die von den Filtertüchern 6a, 6b überspannt sind, und die sich an gleichen Stütznocken 7 der benachbarten Kammerplatten 1 absützen. Die Filtertücher 6a, 6b besitzen umgelegte, mit Löchern versehene Ränder 8, 9, mit denen sie an Haltestiften 10 der Kammerfilterplatte 1 eingehängt sind.

In jedem Filtratraum zwischen dem innenliegenden, in der Wandstärke reduzierten Bereich 11 der Kammerplatte 1 und den Filtertüchern 6a bzw. 6b ist jeweils ein ringförmiges Blähkissen 12 angeordnet. Jedes Blähkissen 12 besteht aus zwei elastischen Membranen 13, 14, die mit einer mittigen Öffnung 15 für den Trübedurchgang versehen sind und sowohl an ihrem Außenrand 16 als auch an ihrem Innenrand 17 längs flächig aufeinander liegender Randstreifen 18, 19 dicht miteinander verbunden, z. B. verschweißt oder verklebt, sind. Das Blähkissen 12 weist Befestigungsmittel in Form von zu einer Seite hin abragenden Steckstiften 20 auf, die in zugeordnete Aufnahmelöcher 21 der Kammerplatten 1 eingesteckt sind. Ferner ist jedes Blähkissen 12 mit einem Anschlußstutzen in Form eines Schlauches 22, 23 versehen, welcher jeweils in einen zum Druckmediumkanal 3 führenden Verbindungskanal 24, 25 - beispielsweise durch Verkleben - dicht eingepaßt ist.

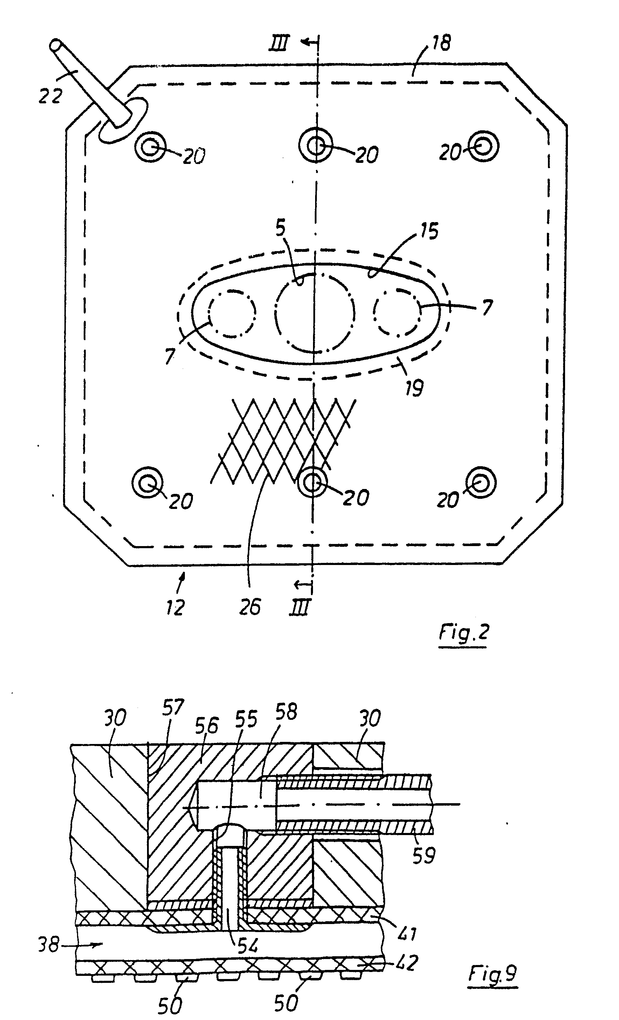

Wie Fig. 2 zeigt, ist die mittige Öffnung 15 des Blähkissens 12 als Oval mit einer solchen Weite ausgebildet, daß die beiden dem Trübezufuhrkanal 5 der Platte 1 benachbarten Stütznocken 7, 7 ebenfalls von der Öffnung 15 umfaßt werden. Somit entfällt eine Pressung des Kissens 12 zwischen den Stütznocken 7, 7 benachbarter Platten, womit auch die Einspannränder 2 eines Plattenpaketes dicht aneinander anliegen. Ferner ist in Fig. 2 noch schematisch eine Kanalierung in Form einer Verrippung 26 angedeutet, die zumindest auf der filtertuchseitigen Hauptfläche des Blähkissens 12 vorgesehen ist.

Nach Ausbildung eines Filterkuchens in dem zwischen zwei Filtertüchern 6a, 6b liegenden Filterkuchenraum 27 werden die Rlähkissen 12 mit hohem Druck beaufschlagt, so daß der Filterkuchen von beiden Seiten her durch die sich aufblähenden Kissen 12 ausgepreßt wird. Die ausgepreßte Flüssigkeit tritt dabei durch die Filtertücher 6a, 6b hindurch in den Filtratraum 28 und läuft dann längs der Verrippung 26 zum Außenrand 16 der Blähkissen 12. Die Blähkissen 12 sind dabei so in den Filtratraum 28 eingepaßt, daß ein Durchlaß zur rückwärtigen Hälfte des Filtratraumes 28 offenbleibt und das Filtrat über plattenseitige Verbindungskanäle 29 den Filtratablaufkanälen 4 zugeführt werden kann.

Die Bauform nach den Fig. 1 bis 3 mit zwei Blähkissen 12 pro Filterkammer empfiehlt sich besonders bei Filterkuchenmaterial, welches sehr hartnäckig an den Filtertüchern 6a, 6b anklebt. Denn die Filterkuchen können nach dem Öffnen der Kammerplatten 1 beidseits durch stoßweise Beaufschlagung der Blähkissen 12 abgesprengt werden. Für die meisten Trübearten genügt allerdings die Anordnung eines einzigen Blähkissens, womit neben einer Kosteneinsparung auch der Filterkuchenraum 27 weniger eingeengt wird.

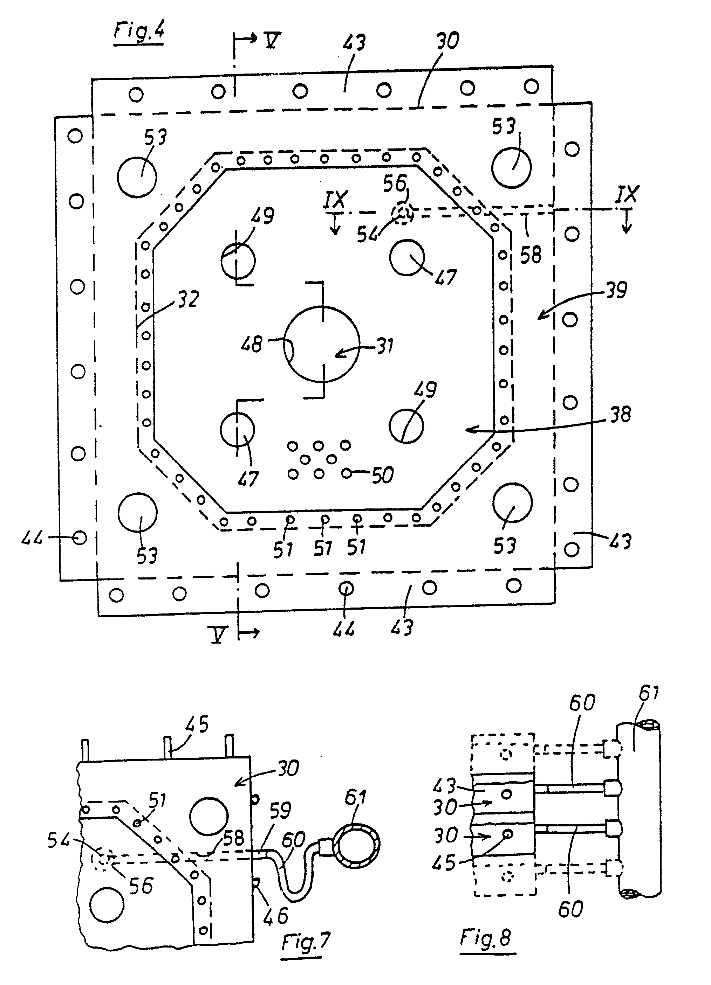

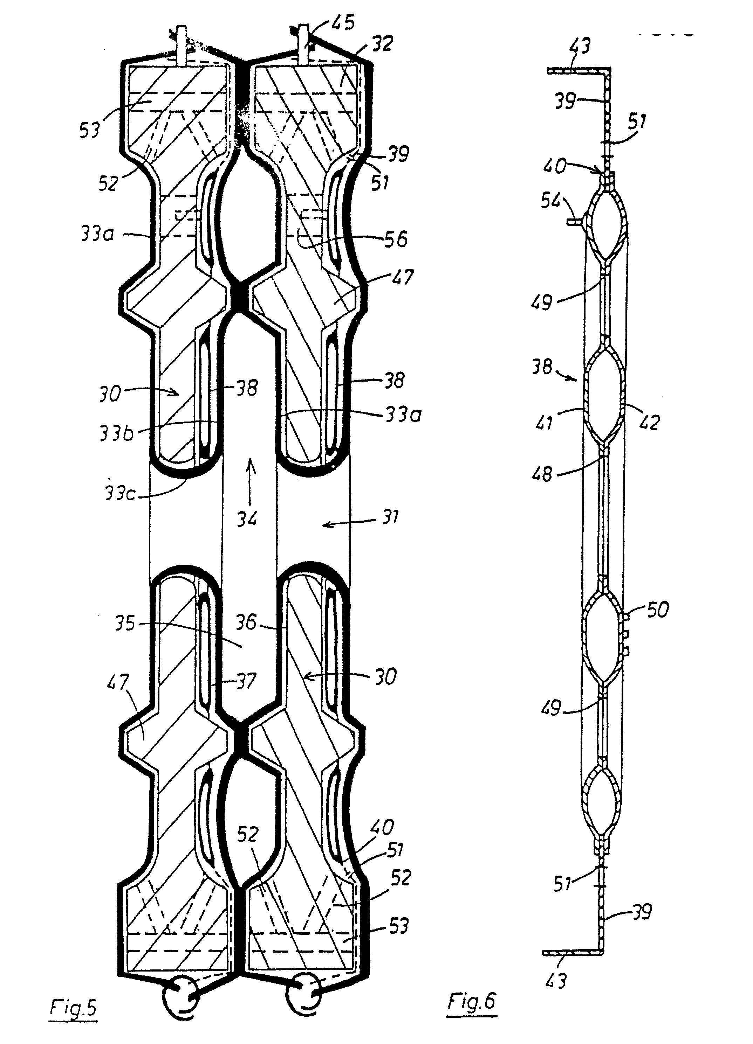

Die Fig. 4 bis 9 veranschaulichen eine bevorzugte Ausführungsform einer Kammerfilterpresse nach der Erfindung. Die Kammerfilterpresse umfaßt wiederum eine Vielzahl von gleichartigen, aufeinanderfolgenden Kammerplatten 30 mit zentralem Trübezufuhrkanal 31, welche mit einem äußeren, umlaufenden Einspannrand 32 aneinander liegen. Kammerplatten 30 sind beidseits mit Filtertüchern 33a, 33b überspannt, die im Bereich des Trübezufuhrkanals 31 über einen Filtertuchärmel 33c miteinander verbunden sind. Wie insbesondere aus Fig. 5 hervorgeht, fassen zwei Kammerplatten 30 jeweils zwischen sich eine Filterkammer 34 ein, welche ihrerseits aus einem zwischen den Filtertüchern 33a, 33b liegenden, mittleren Filterkuchenraum 35 und zwei jeweils zwischen Platte 30 und Filtertuch 33a bzw. 33b liegenden, äußeren Filtraträumen 36, 37 besteht. In einem der beiden Filtraträume 37 ist jeweils ein Blähkissen 38 als Nachpreßeinrichtung für den Filterkuchen aufgehängt. Als Befestigungsmittel für ein Blähkissen 38 dient dabei ein vollständig umlaufender, flüssigkeitsdurchlässiger Einhängerandstreifen 39 aus Gewebematerial, welcher am äußeren Rand 40 des aus zwei Membranen 41, 42 gefertigten Blähkissens 38 eingeklebt ist. Der Einhängerandstreifen 39 ist um den Einspannrand 32 der jeweiligen Kammerplatte 30 herumgelegt und weist allseits äußere, die Platte 30 überragende Endabschnitte 43 auf. In letzteren sind Aufhängelöcher 44 zur Befestigung an Haltestiften 45 vorgesehen, die am oberen Außenrand der Filterplatte 30 eingesetzt sind und gleichzeitig zur Befestigung der Filtertücher 33a, 33b dienen. An den seitlichen und unteren Außenrändern sind die Filtertücher 33a, 33b und die Endabschnitte über sogenannte Tuchbinder 46 verspannt. Fig. 4 zeigt hier die Endabschnitte 43 in noch nicht eingehängtem Zustand.

Bei den Filterplatten 30 handelt es sich um eine größere Bauform, welche im Bereich der Filterkammer 34 vier um den zentralen Trübezufuhrkanal 31 herum verteilte Stütznocken 47 besitzt. Bei einer Plattenausführung aus Kunststoff wären hier grundsätzlich auch beispielsweise acht Stütznocken denkbar. Das Blähkissen 38 weist somit neben einer zentralen, abgedichteten Durchtrittsöffnung 48 für den Trübekanal 31 vier weitere Durchtrittsöffnungen 49 für die Stütznocken 47 auf, damit eine einwandfreie Anlage der äußeren Einspannränder 32 der Kammerplatten 30 gewährleistet bleibt.

Bei der Filtration wird die Trübe über den Trübezufuhrkanal 31 in den Filterkuchenraum 35 geleitet und dringt durch die Filtertücher 33a, 33b in die Filtraträume 36, 37. Um einen Ablauf des Filtrats zum Außenrand 40 des im Filtraraum 37 angeordneten Blähkissens 38 zu gewährleisten, ist dieses mindestens auf seiner dem Filtertuch 33b zugewandten Hauptfläche mit einer Kanalierung in Form von Noppen 50 versehen, die in der Zeichnung nur bereichsweise angedeutet sind. Das Filtrat kann dort durch den durchlässigen Einhängerandstreifen 39 hindurch in die plattenseitige Hälfte des Filtraraumes 37 eintreten. Zusätzlich sind hier zur Erleichterung des Filtratdurchtritts Durchlaßöffnungen 51 vorgesehen. Danach kann das Filtrat über Verbindungskanäle 52 vier im Eckbereich des Einspannrandes 32 verlaufenden Filtratablaufkanälen 53 zugeführt werden.

Die Blähkissen 38 können zum Auspressen der Filterkuchen über Ventilnippel 54 mit hohem Druck beaufschlagt werden, welche jeweils in einer axialen Gewindebohrung 55 eines zylindrischen Übergangsstücks 56 eingeschraubt sind; vgl. Fig. 8. Das Übergangsstück 56 ist seinerseits in einer Durchgangsbohrung 57 der Filterplatte 30 eingepaßt, die im Falle der Nachrüstung einer älteren Kammerfilterpresse mit geringem Aufwand nachträglich eingebracht werden kann. Die Gewindebohrung 55 des Ventilnippels 54 mündet in eine Querbohrung 58, die vom Verbindungsstück 56 aus bis zum seitlichen Außenrand jeder Kammerplatte 30 verläuft. Zur Abdichtung zwischen Übergangsstück 56 und Kammerplatte 30 ist in die Querbohrung 58 ein Zuführrohr 59 eingeschraubt, wobei aber auch andere Formen der Abdichtung denkbar sind. An das Zuführrohr 59 ist außen schließlich jeweils ein flexibler Schlauch 60 angeschlossen, welcher zu einer gemeinsamen Druckmediumleitung 61 für alle Blähkissen 38 führt. Diese Ausgestaltung des Druckanschlusses der Blähkissen 38 hat gegenüber der Ausführungsform nach Fig. 1 den Vorteil, daß sich das Druckmedium sowohl an der gemeinsamen Hauptleitung als auch im Bereich des Blähkissenanschlusses besonders sicher und dauerhaft abdichten läßt.

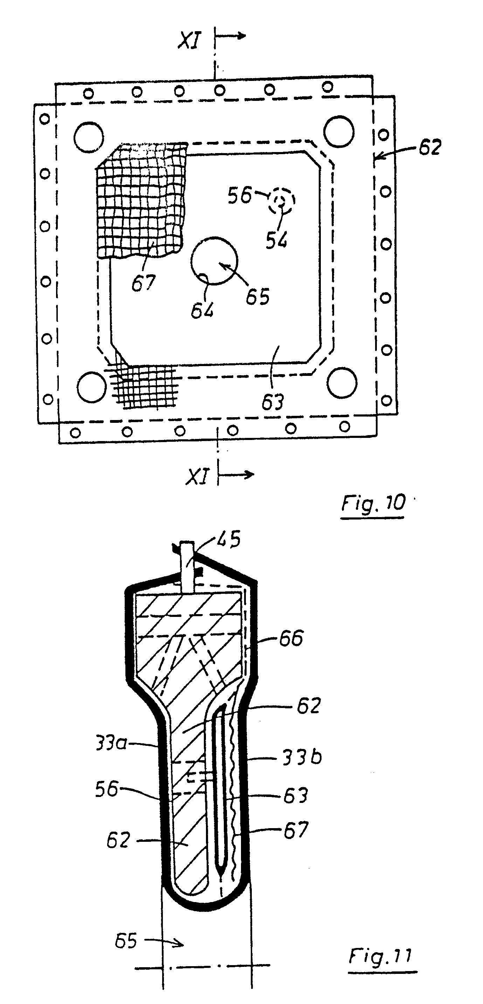

In den Fig. 10 und 11 ist schließlich eine weitere Ausführungsform einer Kammerfilterpresse mit relativ kleinen Kammerplatten 62 skizziert, die keine Stütznocken benötigen. Infolgedessen weist ein zugeordnetes Blähkissen 63 lediglich eine zentrale, abgedichtete Durchtrittsöffnung 64 für den Trübezufuhrkanal 65 auf. Das Blähkissen 63 ist wiederum mit einem vollständig umlaufenden Einhängerandstreifen 66 an der Kammerplatte 62 aufgehängt. Da der Einhängerandstreifen 66 aus besonders grobem, durchlässigem Gewebe besteht, sind zur Filtratableitung keine besonderen Durchlaßöffnungen erforderlich. Das Blähkissen 63 ist auf der Seite des Filtertuchs 33b zur Ableitung des Filtrats mit einer Kanalierungsmatte 67 überzogen, so daß das Blähkissen 63 selbst aus glatten Membranen gefertigt werden kann. Die Kanalierungsmatte 67 kann aus einem groben Draht- oder Kunststoffgewebe bestehen und ist beispielsweise durch Klammern am Einhängerandstreifen 66 des Blähkissens 63 befestigt.

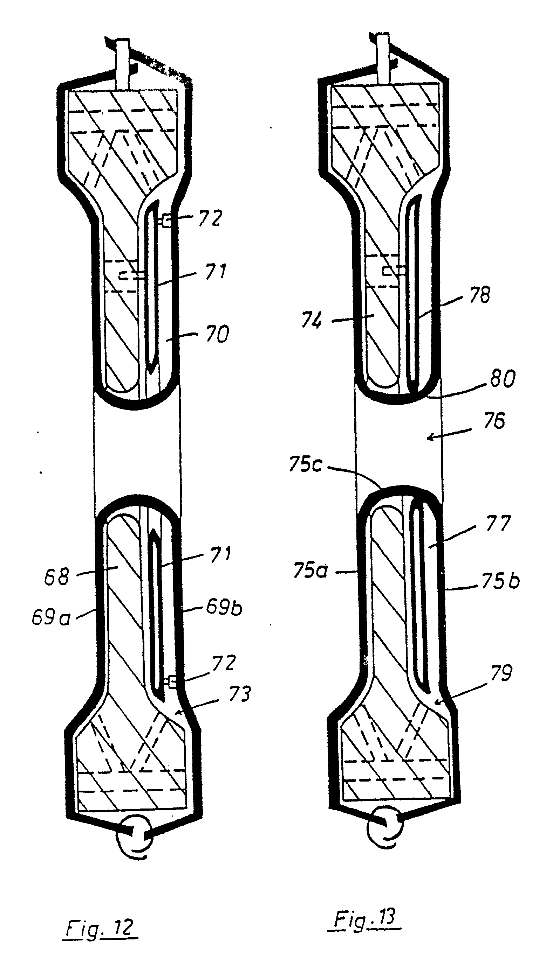

Fig. 12 zeigt eine weitere Ausführungsform einer Kammerplatte 68, welche beidseits mit Filtertüchern 69a, 69b überspannt ist. Im Filtratraum 70, welcher von der Kammerplatte 68 und dem Filtertuch 69b eingefaßt ist, ist ein Blähkissen 71 angeordnet, welches über Verbindungsglieder 72 am Filtertuch 69b aufgehängt ist. Somit übernimmt das Filtertuch 69b neben seiner Filterfunktion gleichzeitig die Aufgabe eines Befestigungsmittels zwischen Blähkissen 71 und Kammerplatte 68.

Aufgrund der Aufhängung des Blähkissens 71 im Filtratraum 70 verbleibt an seinem unteren Rand ein größerer Spalt 73, durch welchen das Filtrat von der filtertuchseitigen zur plattenseitigen Hälfte des Filtratraumes 70 übertreten kann.

Fig. 13 zeigt eine Kammerplatte 74, welche beidseits mit Filtertüchern 75a, 75b überspannt ist, die ihrerseits im Bereich eines zentralen Trübezufuhrkanals 76 durch einen Filtertuchärmel 75c miteinander verbunden sind. In dem auf der Seite des Filtertuchs 75b liegenden Filtratraum 77 ist ein Blähkissen 78 angeordnet, welches aus einem relativ steifen Membranmaterial, z. B. aus Hartgummi oder einem Elastomer, besteht. Insofern behält das Blähkissen 78 in drucklosem Zustand auch dann seine Form, wenn es nicht an seinem oberen Rand aufgehängt ist, zumal eine ständige seitliche Abstützung durch das Filtertuch 75b und die Kammerplatte 74 gegeben ist. Um einen ausreichend großen Filtrat-Durchlaßschlitz 79 am unteren Rand des Blähkissens 78 zu erhalten, ist das Blähkissen 78 im Bereich seiner zentralen Trübe-Durchtrittsöffnung 80 am Filtertuchärmel 75c aufgehängt.

## Ansprüche

1. Horizontale Kammerfilterpresse mit jeweils beidseits mit Filtertüchern überspannten, rahmenlosen Kammerplatten (1) und mit einem mittigen Trübezufuhrkanal (5), wobei jeweils zwei benachbarte Kammerplatten (1) mit einem äußeren, umlaufenden verdickten Einspannrand (2) aneinanderliegen und zwischen sich eine Filterkammer einfassen, welche ihrerseits aus einem zwischen den Filtertüchern (6a, 6b) liegenden, mittleren Filterkuchenraum (27) und zwei jeweils zwischen Platte (1) und Filtertuch (6a, 6b) liegenden, äußeren Filtraträumen (28) besteht, und mit Nachpreßeinrichtungen für die Filterkuchen, welche im Bereich mindestens eines der beiden Filtraträume (28) jeder Filterkammer angeordnet sind, dadurch gekennzeichnet, daß die Nachpreßeinrichtungen ringförmige Blähkissen (12) sind, welche jeweils innerhalb eines Filterraumes (28) an der angrenzenden Kammerplatte (1) über Befestigungsmittel aufgehängt sind und jeweils aus zwei mit einem Durchbruch (15) für die mittige Trübezufuhr versehenen Membranen (13, 14) bestehen, die an ihrem äußeren Rand (16) und an ihrem inneren Rand (17) flächig aufeinanderliegen und dicht, z. B. durch Verschweißen oder Verkleben, miteinander verbunden sind.

2. Kammerfilterpresse nach Anspruch 1, dadurch gekennzeichnet, daß das Blähkissen (38) im Bereich von plattenseitigen Stütznocken (47) jeweils eine abgedichtete Durchtrittsöffnung (49) aufweist.

3. Kammerfilterpresse nach Anspruch 1 oder 2, dadurch gekennzeichnet, daß die Befestigungsmittel von einer Blähkissenhauptfläche abragende Steckstifte (20) sind, denen an den Kammerplatten (1) Aufnahmelöcher (21) zugeordnet sind.

4. Kammerfilterpresse nach Anspruch 1 oder 2, dadurch gekennzeichnet, daß die Befestigungsmittel jeweils aus einem mindestens am oberen Rand (40) des Blähkissens (38) angesetzten Einhängerandstreifen (39) bestehen, welcher um den Einspannrand (32) der jeweiligen Kammerplatte (30) herumgelegt ist und über Haltestifte (45), Binder (46) oder dgl. am Außenrand der Kammerplatte (30), z. B. zusammen mit den Filtertüchern (33), aufgehängt ist.

5. Kammerfilterpresse nach Anspruch 4, dadurch gekennzeichnet, daß der Einhängerandstreifen (39) ein vollständig um das Blähkissen (38) herumlaufender, durchlässiger Gewebestreifen ist.

6. Kammerfilterpresse nach Anspruch 4 oder 5, dadurch gekennzeichnet, daß der Einhängerandstreifen (39) unmittelbar neben dem Außenrand (40) des Blähkissens (38) mit mehreren Durchlaßöffnungen (51) versehen ist, welche einen Flüssigkeitsdurchlaß zwischen der filtertuchseitigen und plattenseitigen Hälfte des Filtratraumes (37) offenhalten.

7. Kammerfilterpresse nach Anspruch 1, dadurch gekennzeichnet, daß das Filtertuch (69b), welches den das Blähkissen (71) aufnehmenden Filtratraum (70) begrenzt, gleichzeitig als Befestigungsmittel für das Blähkissen (71) dient, wobei zwischen Blähkissen (71) und Filtertuch (69b) ein oder mehrere Verbindungsglieder (72) vorgesehen sind.

8. Kammerfilterpresse nach Anspruch 1, dadurch gekennzeichnet, daß die eine Kammerplatte (74) beidseits überspannenden Filtertücher (75a, 75b) im Bereich des zentralen Trübezufuhrkanals (76) über einen Filtertuchärmel (75c) miteinander verbunden sind und daß das Blähkissen (78) aus einem steifen Membranmaterial besteht und im Bereich seiner Durchtrittsöffnung (80) am Filtertuchärmel (75c) aufgehängt ist.

9. Kammerfilterpresse nach einem oder mehreren der Ansprüche 1 bis 8, dadurch gekennzeichnet, daß das Blähkissen (12) im Bereich eines plattenseitigen Trübezufuhrkanals (5) und danebenliegender, plattenseitiger Stütznocken (7) eine ovale, die Stütznocken (7) und den Trübezufuhrkanal (5) umfassende Durchtrittsöffnung (15) besitzt.

10. Kammerfilterpresse nach einem oder mehreren der Ansprüche 1 bis 9, dadurch gekennzeichnet, daß die Blähkissen (12, 38) auf der Filtertuchseite mit einer Kanalierung in Form einer erhabenen Verrippung (26) oder von Noppen (50), Nuten, Rillen oder dgl. versehen sind.

11. Kammerfilterpresse nach einem oder mehreren der Ansprüche 1 bis 9, dadurch gekennzeichnet, daß zwischen Blähkissen (63) und Filtertuch (33b) jeweils eine Kanalierungsmatte (67) angeordnet ist.

12. Kammerfilterpresse nach einem oder mehreren der Ansprüche 1 bis 11, dadurch gekennzeichnet, daß die Blähkissen (38) jeweils über eine durch den Einspannrand (32) der Kammerplatte (30) hindurchgeführte Verbindungsleitung (55, 58, 60) an eine gemeinsame, außerhalb des Plattenpaketes liegende Druckmediumleitung (61) angeschlossen sind.

**Claims**

1. Horizontal chamber filter-press with frameless chamber-plates (1) each covered on both sides with filter-cloths, and with a central channel (5) bringing in unfiltered matter, in which two adjacent chamber-plates (1) each lie adjacent to one another with a thickened orbital outer clamping-rim (2) and contain between them a filter chamber, which itself consists of a central filter-cake space (27) situated between the filter-cloths (6a,6b) and of two outer filtrate-spaces (28) each lying between the plate (1) and the filter-cloth (6a,6b), and with auxiliary pressing-devices for the filter-cakes, positioned in the area of at least one of the two filtrate-spaces (28), characterised in that the auxiliary pressing-devices are ring-shaped inflatable cushions (12), each mounted inside one of the filtrate-spaces (28) on the adjoining chamber-plate (1) by fixing devices and each consisting of two membranes (13,14), equipped with an opening (15) for the central channel bringing in the unfiltered material, which on their outer edge (16) and their inner edge (17) lie flat upon one another and are connected to one another in watertight fashion, (i.e. by welding or bonding).

2. Chamber filter-press according to Claim 1, characterised in that each inflatable cushion (38) has a sealed-off opening (49) in the area of supporting cams (47) at the side of the plate.

3. Chamber filter-press according to Claims 1 or 2, characterised in that the fixing devices are insertable rods (20), projecting from one main surface of the inflatable cushion, and for which reception holes (21) are positioned on the chamber-plates (1)

4. Chamber filter-press according to Claims 1, or 2, characterised in that the fixing devices each consist of a mountable rim-strip (39), set on at least the upper edge (40) of the inflatable cushion (38), which is arranged around the clamping-rim (32) of each chamber-plate (30) and is mounted via retaining rods (45), binders (46) or similar on the outer edge of the chamber-plate (30), together with the filter-cloths (33), for example.

5. Chamber filter-press according to Claim 4, characterised in that the mountable rim-strip (39) is a permeable strip of fabric fully surrounding the inflatable cushion (38).

6. Chamber filter-press according to Claims 4 or 5, characterised in that the mountable rim-strip (39) is, immediately adjacent to the outer edge (40) of the inflatable cushion (38), equipped with several openings (51), which keep open an outlet for liquid between the half of the filtrate-space (37) adjacent to the filter-cloth and the half adjacent to the plate.

7. Chamber filter-press according to Claim 1, characterised in that the filter-cloth (69b) bordering on the filtrate-space (70) which receives the inflatable cushion (71), at the same time serves as a fixing device for the inflatable cushion (71), one or more connecting members (72) being provided between the inflatable cushion (71) and the filter-cloth (69b).

8. Chamber filter-press according to Claim 1, characterised in that the filter-cloths (75a,75b) covering one chamber-plate (74) on both sides, are connected to one another by a filter-cloth sleeve (75c) in the area of the central channel (76) bringing in the unfiltered material and in that the inflatable cushion (78) consists of a stiff membrane material and is mounted in the area of its opening (80) on the filter-cloth sleeve (75c).

9. Chamber filter-press according to one or more of Claims 1 to 8, characterised in that the inflatable cushion (12), has, in the area of a channel (5) at the side of the plate bringing in the unfiltered material, and of adjacent supporting cams (7), at the side of the plate, an oval opening (15) consisting of the supporting cams (7) and the channel (5) bringing in the unfiltered material.

10. Chamber filter-press according to one or more of Claims 1 to 9, characterised in that that the inflatable cushions (12,38) are equipped on the filter-cloth side with a channeling in the form of a raised ribbing (26) or of burls (50), grooves, fluting or similar.

11. Chamber filter-press according of one or more of Claims 1 to 9, characterised in that a channeling-mat (67) is positioned between each inflatable cushion (63) and filter-cloth (33b).

12. Chamber filter-press according to one or more of Claims 1 to 11, characterised in that the inflatable cushions (38) are each connected via a connecting duct (55,58,60) passing through the clamping-rim (32) of the chamber-plate (30) to a common pressure-medium duct (61) lying outside the plate assembly.

**Revendications**

1. Filtre-presse, à chambres, horizontal, comportant des plateaux chambrés (1) sans cadre, garnis de tissus filtrants tendus sur chacun des deux côtés et un canal central d'amenée de liquide à filtrer (5), deux plateaux chambrés (1) voisins s'appliquant l'un sur l'autre par "une bordure de serrage (2) extérieure, épaissie sur sa circonférence, et qui délimitent entre eux une chambre de filtrage, qui se compose, à son tour, d'une enceinte à gâteau de filtre centrale (27) située entre les tissus-filtrants (6a,6b) et de deux enceintes à filtrat (28) extérieures, chacune située entre plateau (1) et tissu filtrant (6a,6b), et avec des moyens d'ajustement de la pression pour les gâteaux de filtre, disposés dans la zone d'au moins l'une des deux enceintes à filtrat (28) de chaque chambre de filtre, caractérisé en ce que les moyens d'ajustement de la pression sont des coussins gonflables (12) annulaires, suspendus chacun à l'intérieur d'une enceinte de filtre (28),contre le plateau de chambre (1) adjacent, par l'intermédiaire de moyens de fixation, et composés chacun de deux membranes (13,14) pourvues d'un passage (15) pour l'amenée centrale du liquide à filtrer, qui s'appliquent l'une sur l'autre à plat sur leur bordure extérieure (16) et leur bordure intérieure (17) et sont reliées l'une a l'autre de façon étanche, par exemple par soudage ou collage.

2. Filtre-presse à chambres selon la revendication 1, caractérisé en ce que dans la zone de bossages d'appui (47) situés du côté plateau, le coussin gonflable (38) présente chaque fois une ouverture de passage (49) respective rendue hermétiquement étanche.

3. Filtre-presse à chambres selon la revendication 1 ou 2, caractérisé en ce que les moyens de fixation sont des pointes d'enfichage (20) faisant saillie d'une surface principale du coussin gonflable, auxquelles des trous de réception (21) sont associés sur les plateaux chambrés (1).

4. Filtre-presse à chambres selon la revendication 1 ou 2, caractérisé en ce que les moyens de fixation sont chacun composés d'une bande de bordure d'accrochage (39) appliquée au moins sur la bordure supérieure (40) du coussin gonflable (38), et qui est passée autour de la bordure de serrage (32) du plateau de chambre (30) respectif et est suspendue, par l'intermédiaire de fiches de maintien (45), d'attaches (46) ou analogues, sur la bordure extérieure du plateau chambré (30), par exemple conjointement avec les tissus filtrants (33).

5. Filtre-presse à chambres selon la revendication 4, caractérisé en ce que la bandes de bordure d'accrochage (39) est une bande textile perméable entourant complètement le coussin gonflable (38).

6. Filtre-presse à chambres selon la revendication 4 ou 5, caractérisé en ce que la bande de bordure d'accrochage (39) est pourvue de plusieurs ouvertures de passage (51) situées directement à côté de la bordure extérieure (40) du coussin gonflable (38), et qui laissent ouvert un passage de liquide entre la moitié située côté tissu filtrant et côté plateau de l'enceinte à filtrat (37).

7. Filtre-presse à chambres selon la revendication 1, caractérisé en ce que le tissu filtrant (69b) qui délimite l'enceinte à filtrat (70) recevant le coussin gonflable sert simultanément de moyen de fixation pour le coussin gonflable (71), un ou plusieurs organes de liaison (72) étant prévus entre le coussin gonflable (71) et le tissu filtrant (69b).

8. Filtre-presse à chambres selon la revendication 1, caractérisé en ce que les tissus filtrants (75a,75b) enserrant un plateau chambré (74) sur les deux faces sont reliés entre eux dans la zone du canal central d'amenée de liquide à filtrer (76) par l'intermédiaire d'une manche en tissu filtrant (75c) et que le coussin gonflable (78) se compose d'un matériau de membrane rigide et est suspendu à la manche de tissu filtrant (75c) dans la zone de son ouverture de passage (80).

9. Filtre-presse à chambres selon une ou plusieurs des revendications 1 à 8, caractérisé en ce que le coussin gonflable (12) comporte, dans la zone d'un canal d'amenée de liquide à filtrer (5) situé côté plateau et des bossages d'appui (7) voisins, situés côté plateau, une ouverture de passage ovale (15) entourant les bossages d'appui (7) et le canal d'amenée du liquide à filtrer (5).

10. Filtre-presse à chambres selon une ou plusieurs des revendications 1 à 9, caractérisé en ce que, sur la face du tissu filtrant, les coussins gonflables (12,38) sont pourvus d'un cheminement de canalisation ayant la forme d'un nervurage (26) proéminent ou de boutons (50), rainures, cannelures, ou analogues.

11. Filtre-presse à chambres selon une ou plusieurs des revendications 1 à 9, caractérisé en ce qu'une natte de canalisation (67) est chaque fois disposée entre coussin gonflable (63) et tissu filtrant (33b).

12. Filtre-presse à chambres selon une ou plusieurs des revendications 1 à 11, caractérisé en ce que les coussins gonflables (38) sont chacun raccordés, par l'intermédiaire d'une conduite de liaison (55,58,60) passant au travers de la bordure de serrage (32) du plateau chambré (30), à une conduite de fluide sous pression (61) commune, située à l'extérieur du paquet de plateaux.

Fig.1

Fig.3

Fig.2

Fig.9

Fig.4

Fig.7

Fig.8

Fig.5

Fig.6

Fig. 10

Fig. 11

Fig. 12

Fig. 13